# EUROPÄISCHE PATENTANMELDUNG

(11) **EP 1 728 913 A2**
(43) Veröffentlichungstag der Anmeldung: **06.12.2006**
(21) Anmeldenummer: 06007790.6
(22) Anmeldetag: 01.06.2006
(51) Int. Cl.: D06F 39/10

(54) **Wasseranschluss mit Siebfilter und wasserführendes Haushaltsgerät**

(30) Priorität: 02.06.2005 DE 202005008766 U
(71) Anmelder: Electrolux Home Products Corporation N.V., 1930 Zaventem (BE)
(72) Erfinder: Geiger, Victor, 91413 Neustadt/Aisch (DE)
(74) Vertreter: Baumgartl, Gerhard Willi

(57) **Zusammenfassung**

Die Erfindung betrifft eine Anordnung aus einem Wasseranschluss (20) für einen Wasserzulaufschlauch (28) und einem in den Wasseranschluss entnehmbar eingesetzten Siebfilter (1), wobei der Wasseranschluss (20) einen Grundkörper (22) und die Siebfläche des in den Grundkörper eingesetzten Siebfilters zumindest eine in Strömungsrichtung verlaufende Vertiefung aufweist. In der zumindest einen Vertiefung der Siebfläche werden Fremdkörper aufgefangen, die bei einem Siebfilterwechsel nicht herausfallen.

## Beschreibung

Die Erfindung betrifft eine Anordnung aus einem Wasseranschluss und einem in den Wasseranschluss entnehmbar eingesetzten Siebfilter, sowie ein wasserführendes Haushaltsgerät.

Bei einem herkömmlichen Wasserzulaufschlauch einer Waschmaschine oder einer Geschirrspülmaschine ist in dessen Wasseranschluss ein Siebfilter eingesetzt, um grobe Verunreinigungspartikel, die im zulaufenden Frischwasser mitgeführt werden, auszufiltern. Nach längerer Gebrauchszeit oder bei hoher Belastung des Wassers mit Rostpartikeln setzt sich das Siebfilter zu und muss gereinigt oder ausgetauscht werden. Das herkömmliche Siebfilter ist kegelig ausgebildet, wobei die Kegelspitze zur Anschlussseite des Wasseranschlusses hin zeigt. Beim unsachgemäßen Entnehmen des Siebfilters aus dem Wasseranschluss können Rostpartikel im Gewinde der Schraubmuffe abgestreift werden und ins Flanschinnere bzw. in den Zulaufbereich des Wasseranschlusses fallen. Dies kann dazu führen, dass diese Partikel in den Dichtbereich eines Zulaufventils gespült werden und dort ein ordnungsgemäßes Schließen verhindern, so dass ständig Frischwasser in das Haushaltsgerät einläuft.

Es ist Aufgabe der Erfindung, eine Anordnung aus einem Wasseranschluss und einem Siebfilter sowie ein Haushaltsgerät mit einem solchen Wasseranschluss vorzusehen, bei denen.die Entnahme des Siebfilters nicht zu einer unerwünschten Verunreinigung führt.

Diese Aufgabe wird mit den Merkmalen des Anspruchs 1 bzw. 13 gelöst.

Vorteilhafte Ausgestaltungen sind Gegenstand von Unteransprüchen.

Gemäß Anspruch 1 ist eine Anordnung aus einem Wasseranschluss und einem darin einsetzbaren Siebfilter vorgesehen. Das Siebfilter ist derart in den Wasseranschluss eingesetzt, dass zumindest eine Vertiefung in der Siebfläche in Strömungsrichtung verläuft. In dem von der zumindest einen Vertiefung teil-umgrenzten Volumen lagern sich beim Durchströmen des Siebfilters die mitgeführten Verunreinigungen bevorzugt ab, da die Vertiefungen die in Strömungsrichtung am tiefsten gelegenen Bereiche der Siebfläche darstellen. Wird dieses Siebfilter aus einem Grundkörper des Wasseranschlusses zum Austausch oder zur Reinigung entnommen, so verbleiben die ausgesiebten bzw. ausgefilterten Rückstände in der zumindest einen Vertiefung, ohne dort abgestreift zu werden oder herausfallen zu können. Damit wird eine Verunreinigung der Innenseite des Grundkörpers oder anderer Bereiche des Wasseranschlusses (z.B. Gewindegänge) und folglich ein Weiterspülen dieser Verunreinigung zu einer Ventilfläche vermieden.

Vorteilhaft sind die Sieböffnungen über die gesamte Fläche des Siebfilters verteilt. Es kann aber auch vorgesehen sein, dass in Teilbereichen keine Öffnungen angeordnet sind, beispielsweise im Seitenbereich und/oder am tiefsten gelegenen Bodenbereich.

Ganz besonders vorteilhaft weist die Siebfläche graben- oder senkenförmige Vertiefungen auf, die an erhöhte Siebflächenbereiche anschließen. Dabei weisen die erhöhten Siebflächenbereiche vorteilhaft Sieböffnungen auf, durch die selbst bei einem allmählichen Zusetzen der graben- oder senkenförmigen Vertiefungen noch ungehindert das zulaufende Wasser durch das Siebfilter treten kann. Selbst bei einer vorübergehenden Ablagerung von Verunreinigungen in den erhöhten Bereichen werden durch Druckschwankungen im strömungsfreien Wasser die Verunreinigungen wieder abgehoben und bevorzugt in Richtung Vertiefung umverteilt.

Ist die Siebfläche nach innen gewölbten bzw. konkav ausgebildet, so ist das durch die Siebfläche teil-umgrenzte Volumen im Vergleich zu einem zum Einsetzen des Siebfilters zur Verfügung stehenden Volumen besonders groß und kann folglich eine große Menge an ausgefilterten Verunreinigungspartikeln bzw. Fremdkörpern aufnehmen, bevor Ablagerungen außerhalb des Siebvolumens auftreten.

Ganz besonders vorteilhaft ist das Siebfilter korbförmig ausgebildet, so dass das innerhalb des Grundkörpers zum Einsetzen des Siebfilters vorhandene Volumen optimal ausnutzbar ist. Gleichzeitig wird die Gefahr eines Herausfallens von Partikeln aus dem durch die Siebfläche umgrenzten Volumen verringert.

Zur Erleichterung des Austauschens des Siebfilters ist vorteilhaft an der Innenseite des Siebfilters zumindest ein Vorsprung ausgebildet, der sich in Richtung Siebinneres bzw. -achse erstreckt. Dadurch kann das Sieb am Vorsprung ergriffen und aus dem Grundkörper des Wasseranschlusses herausgezogen werden.

Vorteilhaft sind an der Seitenwand bzw. am äußeren Bereich des Siebfilters Rippen ausgebildet, die den Siebfilter mechanisch stabilisieren. Springen die Rippen zum Innenbereich hin vor, so kann zwischen den Rippen das zulaufende Wasser abfließen, auch wenn das Siebfilter bereits mit Verunreinigungspartikeln gefüllt ist. Vorteilhaft sind ebenso Rippen an der Außenseite ausgebildet, zwischen denen das durch das Sieb getretene Wasser in Richtung Austrittsseite des Anschlusses abfließen kann. Vorteilhaft sind die Außenrippen so dimensioniert, dass sie nach dem Einsetzen in den Grundkörper an der Innenfläche des Grundkörpers anliegen und so den Siebfilter zusätzlich abstützen. Vorteilhaft sind die Innen- und Außenrippen jeweils als ein Siebflächenbereich mit verstärkter Wandstärke ausgebildet.

Ganz besonders vorteilhaft ist am Außenumfang des Siebfilters ein umlaufender Rand bzw. ein teilweise umlaufender Rand ausgebildet, der das Siebfilter beim Einsetzen in den Grundkörper dort zentriert hält.

Ein Siebfilter in Ausgestaltung nach einem der Ansprüche 1 bis 12 ist selbstverständlich auch unabhängig von der Anordnung einsetzbar.

Anhand von Figuren wird eine Ausführungsform der Erfindung näher erläutert. Es zeigen:
- Fig. 1A: eine Seitenansicht eines Siebfilters,
- Fig. 1B: eine Draufsicht auf das Siebfilter von Fig. 1A,
- Fig. 2: die Anordnung des Siebfilters von Fig. 1A in einem Wasserzulaufanschluss,
- Fig. 3A: einen Siebfilter im Querschnitt gemäß einer zweiten Ausführungsform, und
- Fig. 3B: einen Siebfilter im Querschnitt gemäß einer dritten Ausführungsform.

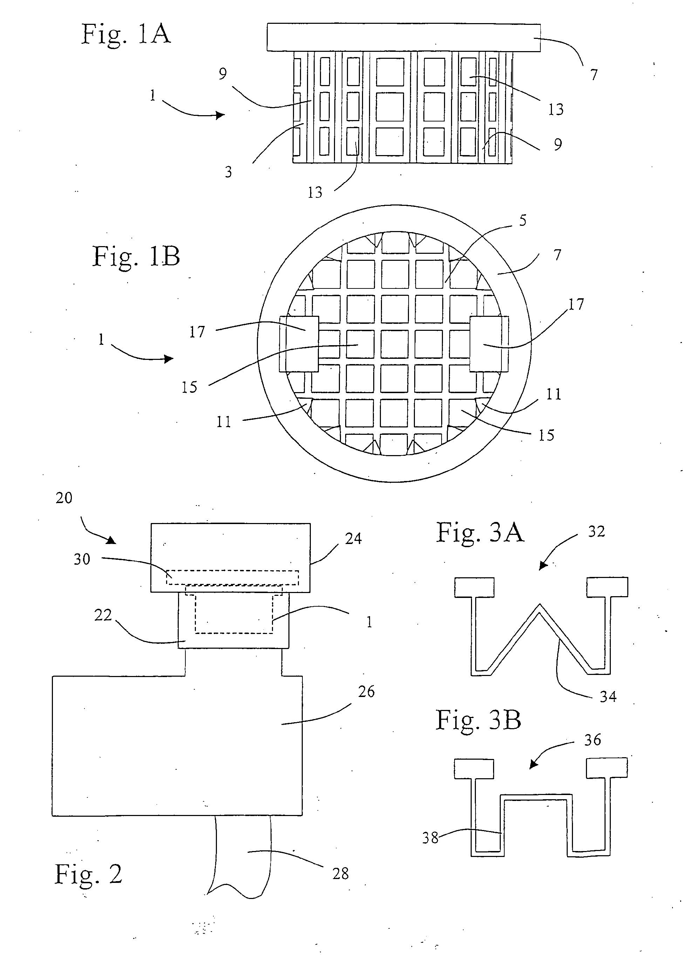

Fig. 1A zeigt ein Siebfilter 1 in Seitenansicht und Fig. 1B zeigt das Siebfilter in Draufsicht (aus der Zulaufrichtung gesehen). Das Siebvolumen des Siebfilters 1 wird durch eine zylindrische Seitenwand.3 und ein ebenes Bodenelement 5 (Fig. 1B) begrenzt. An der Oberkante der Seitenwand 3 ist umlaufend und nach außen vorspringend ein Sims 7 ausgebildet, dessen Durchmesser geringfügig kleiner ist als der Innendurchmesser des Einsatzbereiches in einem Flansch 22 (Fig. 2), in den das Siebfilter austauschbar eingesetzt ist. Von der Außenfläche der Seitenwand 3 stehen Außenstege 9 hervor, zwischen denen eine Vielzahl von Wandöffnungen 13 ausgebildet ist. Den Außenstegen 9 gegenüberliegend sind an der Innenfläche der Seitenwand 3 Innenstege 11 ausgebildet, die zur Innenseite des Siebfilters 1 hervorstehen. Innen- und Außenstege 9, 11 verlaufen über die gesamte Höhe der Seitenwand 3 in Fließrichtung, wobei bei mit Partikeln gefüllter Innenseite des Siebs das Wasser noch zwischen den Innenstegen 11 zu den Wandöffnungen 13 fließen kann und nach Durchtritt durch die Wandöffnung 13 zwischen den Außenstegen 9 und der Innenfläche des Flansches 22 abfließen kann. Verteilt über die Fläche des Bodenelements 5 sind Bodenöffnungen 15 vorgesehen.

Von der Innenseite des Simses 7 stehen in Richtung Siebachse Greifnasen 17 hervor, deren Tiefe sich in Achsrichtung des Siebs über den oberen Bereich der Siebfilterhöhe erstreckt. Beim dargestellten Siebfilter 1 haben die Greifnasen 17 eine Höhe entsprechend der axialen Stärke des Simses, so dass die Greifnasen 17 zum Entnehmen des Siebfilters 1 aus dem Flansch 22 mit einem Finger hintergriffen werden können.

Fig. 2 zeigt schematisch einen Wasseranschluss 20, in den das Siebfilter 1 eingesetzt ist (gestrichelt dargestellt). Wie oben bereits erwähnt, weist der Flansch 22 eine Ausnehmung auf, in die das Siebfilter 1 einsetzbar ist, so dass der Außenrand des Simses 7 nahezu bündig an der Innenfläche der Ausnehmung anliegt. Der Flansch 22 ist mit einer Ventileinheit 26 verbunden, in der ein Ventil zum Öffnen und Schließen des Wasserzulaufs angeordnet ist. Von der Ventileinheit 26 führt ein Zulaufschlauch 28 zu einem Haushaltsgerät (nicht dargestellt), wie beispielsweise einer Geschirrspülmaschine oder einer Waschmaschine. Das Siebfilter 1 liegt mit seinem Sims 7 auf einem im Grundkörper (hier: Flansch 22), ausgebildeten Anschlagelement (z.B. Sims) auf. In weiterer Ausgestaltung kann das Siebfilter zusätzlich oder alternativ mit seinem Bodenbereich 5 im Grundkörper anliegen.

Über den Flansch 22 ist eine Schraubmuffe 24 aufgesetzt, in die eine elastische Dichtung 30 (gestrichelt dargestellt) einsetzbar ist. Die Dichtung 30 wird durch eine Nut am Ende des Gewindegangs der Schraubmuffe 24 gehalten und erstreckt sich über die Dichtfläche des Flansches 22 hinaus bis teilweise über den Sims 7, so dass die Dichtung 30 das Siebfilter 1 in der Ausnehmung des Flansches 22 gegen ein Herausfallen sichert.

Die Fig. 3A und 3B zeigen schematische Querschnittsansichten von Siebfiltern 32, 36 einer zweiten und dritten Ausführungsform. Abgesehen von einer Abwandlung des Bodenelements 5 des in den Fig. 1A und 1B dargestellten Siebfilters 1 sind die Siebfilter 32, 36 identisch zum Siebfilter 1, wobei die Querschnittsdarstellung in Entsprechung durch die Mitte des Siebfilters 1 und die Greifnasen 17 verläuft.

Bei dem in Fig. 3A dargestellten Siebfilter 32 ist die Bodenfläche nicht eben, sondern weist in seiner Mitte eine zylinderspitzenförmige Siebfläche 34 auf, deren Spitze entgegengesetzt zur Zulaufrichtung weist, also in Richtung Anschlussseite. Werden durch das zulaufende Frischwasser Fremdkörper in den Siebfilter eingetragen und durch das Filtern dort zurückgehalten, so lagern sich die Fremdkörper bevorzugt in den tieferen Bereichen des Siebfilters ab. Die höher gelegenen Bereiche der Siebfläche um die Spitze der Kegelspitze 34 herum bleiben selbst über eine lange Nutzungsdauer des Siebfilters frei, so dass das Wasser in den freien Bereichen ungehindert in Richtung Zulaufschlauch 28 abfliesen kann.

Bei dem in Fig. 3B dargestellten Siebfilter 36 erhebt sich anstelle der Kegelspitze.34 eine zylinderförmige Siebfläche 38 vom Bodenbereich in Richtung Anschlussseite. Auch hier sammeln sich die eingetragenen Fremdkörper bevorzugt in der ringförmigen Vertiefung um die zylinderförmige Siebfläche herum.

### Bezugszeichenliste

- 1: Siebfilter
- 3: Seitenwand
- 5: Bodenelement
- 7: Sims
- 9: Außensteg
- 11: Innensteg
- 13: Wandöffnung
- 15: Bodenöffnung
- 17: Greifnase
- 20: Wasseranschluss
- 22: Flansch
- 24: Schraubmuffe
- 26: Ventileinheit
- 28: Zulaufschlauch
- 30: Dichtung
- 32: Siebfilter
- 34: Kegelspitze
- 36: Siebfilter
- 38: Zylinder

## Patentansprüche

1. Anordnung aus einem Wasseranschluss (20) für einen Wasserzulaufschlauch (28) und einem in den Wasseranschluss entnehmbar eingesetzten Siebfilter (1, 32, 36), wobei der Wasseranschluss (20) einen Grundkörper (22) und die Siebfläche (3, 5, 34, 38) des in den Grundkörper eingesetzten Siebfilters zumindest eine in Strömungsrichtung verlaufende Vertiefung aufweist.

2. Anordnung nach Anspruch 1, wobei die Siebfläche (3, 5) des Siebfilters keilförmig, konkav oder nach innen gewölbt ausgebildet ist und das Siebfilter (1) im Anschluss so angeordnet ist, dass die konkave oder gewölbte Innenfläche zur Anschlussseite zeigt.

3. Anordnung nach Anspruch 1 oder 2, wobei die zumindest eine Vertiefung graben- oder senkenförmig neben zumindest einem erhöhten Siebflächenbereich (34, 38) ausgebildet ist, insbesondere neben zumindest einem erhöhten Siebflächen-Bodenbereich ausgebildet ist.

4. Anordnung nach Anspruch 3, wobei die Vertiefung umlaufend um den erhöhten Siebflächen-Bodenbereich (34, 38) ausgebildet ist, insbesondere um einen kegel- oder zylinderförmigen Siebflächen-Bodenbereich.

5. Anordnung nach einem der vorhergehenden Ansprüche, wobei das Siebfilter (1) korbförmig ausgebildet ist.

6. Anordnung nach einem der vorhergehenden Ansprüche, wobei an der Innenseite des Siebfilters (1) zumindest ein Vorsprung (17) ausgebildet ist, der sich von der Innenseite zur Filterachse hin erstreckt.

7. Anordnung nach einem der vorhergehenden Ansprüche, wobei eine Vielzahl von Sieböffnungen (13, 15) am Boden- oder inneren Bereich (5) und/oder am Seitenwand- oder äußeren Bereich (3) des Siebfilters (1) ausgebildet sind.

8. Anordnung nach einem der vorhergehenden Ansprüche, wobei am Seitenwand- oder äußeren Bereich (3) des Siebfilters Rippen (9, 11) oder Stege ausgebildet sind.

9. Anordnung nach Anspruch 8, wobei die Sieböffnungen (13, 15) zwischen den Rippen (9, 11) oder Stegen angeordnet sind.

10. Anordnung nach Anspruch 8 oder 9, wobei die Rippen (9, 11) oder Stege zumindest am Seitenwand- oder äußeren Bereich (3) des Siebfilters (1) in Strömungsrichtung verlaufen oder im wesentlichen in Strömungsrichtung verlaufen.

11. Anordnung nach einem der vorhergehenden Ansprüche, wobei das Siebfilter (1) am Umfang einen vorzugsweise umlaufenden Rand (7) aufweist, dessen Außenquerschnitt dem Innenquerschnitt der Durchgangsöffnung des Grundkörpers (22) entspricht oder ungefähr entspricht.

12. Anordnung nach einem der vorhergehenden Ansprüche, wobei der Wasseranschluss (20) ein Verbindungselement (24), insbesondere eine Schraub- oder Bajonettmuffe, und eine in das Verbindungselement einsetzbare Dichtung (30) aufweist, wobei der Innenumfang der Dichtung den Außenumfang des Siebfilters (1) zumindest teilweise überlappt.

13. Wasserführendes Haushaltsgerät mit einer Anordnung (1, 20) nach einem der vorhergehenden Ansprüche.
